# EUROPEAN PATENT APPLICATION

(11) **EP 1 090 886 A2**
(43) Date of publication of application: **11.04.2001**
(21) Application number: 00303280.2
(22) Date of filing: 18.04.2000
(51) Int. Cl.: C02F 11/18, C02F 1/52, C05B 17/00, C05F 7/00

(54) **A method of treating sludge and a method of treating organic waste water comprising the same**

(30) Priority: 19.04.1999 JP 11117399
(71) Applicant: Otake, Hisao, Higashi-Hiroshima-shi, Hiroshima 739-0023 (JP); Shinko Pantec Co., Ltd., Kobe-shi, Hyogo 651-0072 (JP); Japan Waste Research Foundation, Shinjuku-ku (JP)
(72) Inventor: Otake, Hisao, Higashi-Hiroshima-shi, Hiroshima 739-002 (JP); Kato, Junichi, Fukuyama-shi, Hiroshima 721-0973 (JP); Kuroda, Akio, Residence of Hiroshima University, Higashi-Hiroshima-shi Hiroshima 739-0046 (JP); Nishimoto, Yoshihito, Himeji-shi, Hyogo 670-0083 (JP); Katsura, Kenji, Kobe-shi, Hyogo 651-2243 (JP); Hasegawa, Susumu, Kobe-shi, Hyogo 651-2242 (JP)
(74) Representative: Pett, Christopher Phineas

(57) **Abstract**

A novel method for treating organic waste water is provided, which is capable of separating and recovering phosphorous components in a liquid or solid form. According to the method of the present invention, reuse of phosphorous components can be facilitated, while the content of phosphorous components contained in a large quantity of a primary treated liquid can be reduced. A method of treating sludge or organic waste water is provided comprising the step of heating the sludge at 60°C to 90°C for 10 min. to 120 min, to release the phosphorous components from the sludge to a liquid phase.

## Description

The present invention relates to a process for treating organic waste water discharged from a sewage treatment process of a sewage treatment plant or a night soil treatment plant, as well as a process for the treatment of organic effluent from a food factory, chemical factory or the like, and to separate and recover phosphorous components contained in the waste water at a low cost and at a high yield.

In the methods of treating the organic waste water mentioned above, one extensively used method subjects a biomass sludge predominantly containing microbial cells, as well as an excess sludge containing an untreated residual sludge, to a solid-liquid separation using a precipitation tank or the like. These sludges have been produced by biological digestion of the waste water. In this method, the resulting liquid portion obtained as a supernatant from such a separation process is appropriately discarded, and the excess sludge portion is disposed of at sea or in a landfill site.

However, depending on the raw organic effluent that is treated, a large amount of phosphorous components (e.g., orthophosphoric acids, polyphosphoric acids, phosphate salts and their esters, phosphoproteins, glycerophosphoric acids, phospholipids and the like) can remain in the treated liquid and the excess sludge by the method described above. Discarding such substances can directly result in environmental pollution. In particular, it is undesirable to discharge treated liquids containing a large amount of such phosphorous components into lakes or ponds, since this can cause a drastic growth of phytoplankton which is associated with the eutrophication of water.

Sometimes, a procedure is used which comprises adding a flocculant to the treated liquid obtained from the solid-liquid separation device in order to reduce the amount of the phosphorous components, followed by discharging the treated liquid. However, this method has disadvantages because subjecting a large amount of the treated liquid to such a flocculation process requires a large-scale device, thereby causing an increase in cost, time, labor and the like, which is necessary to practice this method. Furthermore, flocculation efficiency is low, and removal of the phosphorous components at times is insufficient. Therefore, discarding an excess sludge without sufficiently removing the phosphorous components contained in the sludge has often been necessary.

Meanwhile, conventional processes for removing phosphorous components from a waste water include, for example: [1] a chemical flocculation method; [2] a crystallization dephosphorizing method; and [3] an anaerobic-aerobic activated sludge method (see Sewage Service Project, Design Guide and Review, published by Japan Sewage Work Association, Vol. 2, (1994) pp. 131-136).

In the chemical flocculation method, flocculants, such as aluminum sulfate, are mixed with waste water to precipitate flocs of insoluble phosphate salts (including a floc of microorganisms). Precipitation is based on the fact that trivalent metal cations, such as aluminum ions and ferric ions, chemically react with orthophosphoric ions to form insoluble phosphate salts. According to this method, an increase of excess sludge ranging from 5% to 20% has been reported. Therefore, in order to preserve the environment, it is not desirable to dispose of a large amount of excess sludge containing a large amount of the phosphorous components.

The crystallization method is based on the production of an insoluble hydroxyapatite by a reaction between orthophosphoric ions and calcium ions. This method is preferred because an increase in excess sludge does not occur. However, it is necessary to strictly control the conditions required for crystallization of apatite (e.g., removal of crystallization inhibitor, such as carbonic ion, and pH adjustment, temperature adjustment, as pretreatments). Therefore, the applicability of this method is limited. Furthermore, because the method includes factors causing an increase in cost, it is not preferred as a method of waste water treatment.

In the anaerobic-aerobic activated sludge method, effluent is subjected to a repeated treatment in an anaerobic tank, an aerobic tank and a precipitation tank. Thus, the phosphorous components can be present in the excess sludge, and thereby the phosphorous components in the treated liquid can be reduced. This method is based on the phenomenon that microorganisms in the anaerobic state release polyphosphoric acids in the form of orthophosphoric acids, although microorganisms ingest and metabolize an excess amount of orthophosphoric acids in an aerobic state in order to accumulate orthophosphoric acids as polyphosphoric acids. According to this method, although the phosphorous components can be effectively removed from the treated liquid, the excess sludge is rich in phosphorous components and also contains various other organic components and heavy metal components. Therefore, discarding such an excess sludge causes problems. Furthermore, despite the possibility of effective uses of the phosphorous components present in the waste water, e.g., in the production of fertilizers, phosphorous chemicals, and the like, there are disadvantages in discarding the phosphorous components in the form of a sludge mixed with such heterogeneous components.

Under such circumstances, a method for the recovery and effective utilization of the phosphorous from the sludge resulting from the biological treatment has been proposed which comprises eluting the phosphorous components from a sludge through an anaerobic treatment of the sludge, thereafter recovering the thus eluted phosphorous components by adding a flocculant (see, Japanese Patent Provisional Publication No. Hei 9-2670990). Further, more recently, an ozonation method (Japanese Patent Provisional Publication No. Hei 9-94596), alkali addition method (Japanese Patent Provisional Publication No. Hei 8-39096), and the like for recovering the phosphorous components from a sludge have been proposed.

The ozonation method raises less problems in connection with the chemicals/wastes. However, this method is not economically practical because high equipment expenses and maintenance expenses are required. With respect to the alkali addition method, an alkalic waste water is generated, which can raise an additional economic problem incurring further expenses. Besides, in a method which comprises releasing the phosphorous components from microorganisms by subjecting a sludge to an anaerobic treatment, the phosphorous components can be recovered and reutilized at a relatively low cost. However, long-term treatment is required, and a high amount of flocculants are necessary for precipitating the phosphorous components.

Additionally, in recent years, percentage achievement of COD in lakes and closed sea areas are low values i.e., 42% and 70%, respectively, probably due to the internal substances occurred. Under such circumstances, effluent control, i.e. control of the total amount of eutrophication factors such as nitrogen and phosphorous was submitted to the Central Deliberation Council from Environment Agency in Japan in February 1999. In response, a verdict is going to be reported in March, 2000. Accordingly, there exists a long-desired demand for a method of treating organic effluent in which the phosphorous components are recovered efficiently in a reusable form, which can be practised at a lower cost without significant adverse effects on the environment.

In view of the problems associated with conventional waste water treatment processes, it is an object of the present invention to provide a method of treating organic waste water which is capable of separating and recovering phosphorous components efficiently in a shorter time. Moreover, beneficial effects may be exerted, namely, the amount of flocculating agents required for the precipitation of phosphorous components may be reduced, leading to advantages in recycling the phosphorous components.

Fig. 1 is a schematic diagram showing an embodiment of the method of treating an organic waste water of the present invention.

Fig. 2 is a graph showing the time dependent release of several kinds of phosphorous components from an activated sludge which was treated at a temperature ranging from 50°C to 90°C.

Fig. 3 is a schematic diagram showing micrograms of fluorescent stained polyphosphoric acids at a magnification of 1000x under visible light or DAPI stained under UV irradiation with the following samples: A, activated sludge; B, supernatant from the treated sludge heated at 70°C for 60 min.; and C, precipitates with CaCl₂.

As the first aspect of the present invention, a method of treating a sludge is provided, which comprises the step of heating the sludge at 60°C to 90°C for 10 min. to 120 min. to release the phosphorous components from the sludge to a liquid phase.

According to this method, releasing phosphorous components from an organic sludge may be achieved by heating a short time, without using any particular equipment or agents. Because the phosphorous components in this method are predominantly released as polyphosphoric acids, the agents required for flocculating and precipitating the phosphorous components may be remarkably diminished compared to conventional methods.

As the second aspect of the present invention, the method according to the above-described method in connection with the first aspect of the invention is provided, further comprising a step of solid-liquid separation of the heated mixture after releasing the phosphorous components, and precipitation of the phosphorous components by adding a flocculant to the liquid phase containing the released phosphorous components. Through recovering the precipitates of the phosphorous components, they may be readily utilized for manufacturing fertilizers, phosphorous chemicals, and the like.

The third aspect of the present invention is to provide a method of treating organic waste water comprising the steps of:
(1) aerobically treating waste water in an aeration step;
(2) solid-liquid separating the treated waste water after the aeration step into a primary treated liquid and a primary sludge in a solid-liquid separation step;
(3) releasing phosphorous components from the primary sludge to a liquid phase by heating the primary sludge at 60°C to 90°C for 10 min. to 120 min. in a phosphorous component release step; and
(4) performing a second solid-liquid separation step to separate the heated primary sludge into a secondary treated liquid containing the released phosphorous components and a secondary sludge that released phosphorous components.

According to this method, the phosphorous components are incorporated and accumulated into microorganisms in the aeration step (1). Then the treated waste water from step (1) is separated in the following step (2) into the primary treated liquid and the primary sludge containing high concentration of phosphorous components; thereafter, the phosphorous components are released from the primary sludge to a liquid phase, followed by step (4), the second solid-liquid separation. As a result, a small volume of the treated liquid containing a high concentration of phosphorous components (the secondary treated liquid) and the secondary sludge substantially free of phosphorous components may be obtained.

As the fourth aspect of the present invention, the method according to the above-described method in connection with the third aspect of the invention is provided, further comprising a phosphorous flocculation step (5), wherein the released phosphorous components are precipitated from the secondary treated liquid by adding a flocculant to the secondary treated liquid. The precipitated phosphorous components can be recovered as a highly concentrated solid in this method, and therefore, they are readily available for manufacturing fertilizers and phosphorous chemicals, and are advantageous in view of handling during transporting.

As the fifth aspect of the present invention, the method according to the above-described method in connection with the third or fourth aspect of the invention is provided, further comprising anaerobically treating the waste water in an anaerobic treatment step (6) prior to aeration step (1). In this method, through subjecting the waste water to anaerobic conditions, ingestion of organic materials into the microorganisms, and release of the phosphorous components to a liquid phase are carried out prior to an extensive incorporation of the phosphorous components into the microorganisms. Thereafter, the phosphorous components are incorporated more efficiently into the microorganisms in aeration step (1).

A preferred embodiment for carrying out the present invention is described below in more detail.

A method of treating a sludge according to the present invention is characterized by releasing the phosphorous components in a sludge to a liquid phase by heating the sludge at 60°C to 90°C for 10 min. to 120 min., preferably at 70°C to 80°C for 20 min. to 60 min. Through heating under such conditions, phosphorous components may be released predominantly as polyphosphoric acids as demonstrated in the Examples set forth below. Accordingly, the amount of the flocculants such as metal salts required for recovering the phosphorous components from a liquid phase as precipitates may be remarkably diminished, compared to the amount required in the conventional methods wherein the phosphorous components are released as orthophosphoric acids or other phosphoric acid derivatives. Such an advantage may be derived from the fact that polyphosphoric acids have smaller numbers of free phosphoric acid residues, which are able to bind to the flocculants, per phosphorous atoms. In addition, metal salts of polyphosphoric acids can form a larger mass to precipitate than those of phosphoric acids, thereby leading to advantages in the following recovery process, e.g., the approximate time required for precipitation separation or centrifuge separation may be reduced, the scale may be diminished, and rotation speed may be lowered. When the sludge is heated at a temperature below 60°C, releasing the phosphorous components as polyphosphoric acids may be difficult, while at a temperature above 90°C, because the released polyphosphoric acids may be subjected to rapid degradation resulting in formation of phosphoric acids, the amount of flocculant required for recovering the phosphorous components will be higher, and the expenses for heating will pile up.

After the above heat treatment is performed for releasing the phosphorous components from a sludge, the heated mixture may be subjected to a step of solid-liquid separation by any means which is ordinarily employed, for example, precipitation, centrifugation, filtration (including membrane separation) and the like. Then, to the liquid phase containing the released phosphorous components, a flocculant such as polyaluminum chloride, aluminum sulfate, ferric chloride, ferrous sulfate, calcium chloride, calcium oxide, calcium hydroxide, magnesium chloride, magnesium sulfate, magnesium oxide, magnesium hydroxide and the like may be added for precipitation of the phosphorous components. In accordance with this method, the precipitation of phosphorous components from the liquid phase may be sufficiently achieved when less than half the amount of the flocculant which was required in the similar conventional method was added. Consequently, a lowering of the expenses may be accomplished, and in addition, a low yield of metal compounds may result, which would be beneficial for the preservation of the environment. After precipitation, the thus obtained solid may be recovered by a conventional method, followed by an optional purification process, and then subjected to processes for the manufacturing of fertilizers, phosphorous chemicals, and the like.

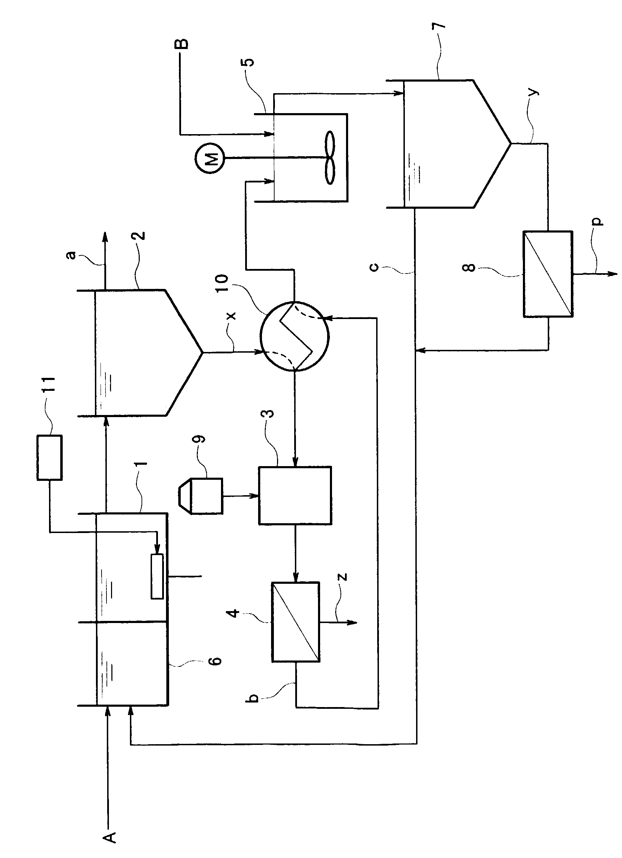

A nonlimiting preferred embodiment relating to the methods of treating organic waste water according to the present invention is schematically shown in the flow sheet of Figure 1.

In the process shown in Figure 1, raw waste water A is initially introduced to an anaerobic treatment tank 6, in which ingestion of organic materials into the microorganisms is carried out under an anaerobic condition while the phosphorous components which are accumulated in the bodies of microorganisms as granules of polyphosphoric acids are released. During this step, phosphorous components are hydrolyzed, and therefore, almost all of them are released as orthophosphoric acids to the liquid phase. Next, the thus treated waste water is introduced to an aeration tank 1, having an air pump 11 as an aeration means disposed therein, in which aerobic microbial digestion and ingestion of the phosphorous components (namely, internal accumulation) by microorganisms can occur. In this step, the released phosphorous components in the previous anaerobic treatment are incorporated and concentrated in the bodies of microorganisms. Then, the mixture resulting from the aeration step is subjected to a solid-liquid separation means 2 for separation into a primary sludge (x) containing highly concentrated phosphorous components, and a primary treated liquid (a). After elevating the temperature of the primary sludge (x) by passing through a heat exchanger 10, phosphorous components contained in the microorganisms in the sludge are released to a liquid phase by heating at 60°C to 90°C for 10 min. to 120 min., preferably at 70°C to 80°C for 20 min. to 60 min. using a heating means 9 such as a heater, a steam generator or the like to release the phosphorous components as polyphosphoric acids in a phosphorous release tank 3. When the phosphorous components are released as polyphosphoric acids, the amount of the flocculants such as metal salts required for recovering the phosphorous components from a liquid phase as precipitates (in phosphorous flocculation tank 5) can be remarkably diminished, compared to the amount required in conventional methods such as an anaerobic treatment method, ozonation method, or alkali treatment method, wherein the phosphorous components are released as orthophosphoric acids or the like as set forth above. Because metal salts of polyphosphoric acids can form a larger precipitating mass than those of phosphoric acids, thereby leading to advantages in the following recovery process, e.g., an approximate time required for precipitation separation or centrifuge separation can be reduced, the scale can be diminished, and/or rotation speed can be lowered.

Subsequent to the treatment in a phosphorous release tank 3, the mixture is separated using a solid-liquid separation means 4 to a relatively small volume of the treated liquid containing a large amount of the phosphorous components (designated as a secondary treated liquid (b)) and the secondary sludge (z). This solid-liquid separation means 4 may include for example, centrifuge, dehydrator and the like. The volume of the resulting secondary treated liquid (b) in this process is substantially reduced compared with the phosphorous effluent obtained in a conventional treatment method. Consequently, the scale of a device for a phosphorous component flocculation step performed for the purpose of recovering the phosphorous components can be relatively small.

A phosphorous flocculation step can be carried out, for example, by a crystallization method. However, in general, the phosphorous components may be flocculated as a solid by introducing the secondary treated liquid (b) to a phosphorous flocculation tank 5, followed by addition of a flocculant B as set forth above under stirring. Because the phosphorous components contained in the secondary treated liquid (b) are predominantly obtained as polyphosphoric acids, the addition of a small amount of flocculant B can result in sufficient flocculation which is a readily retrievable granular solid matter. After addition of the flocculant B with stirring, followed by precipitation, phosphorous components are recovered in accordance with the following step. The amount of the flocculant B which is added to the secondary treated liquid (b) can be a sufficient mole number based on the number of free phosphoric acid residues which is calculated from each amount of the total phosphorous components and polyphosphoric acids.

Then a tertiary treated liquid (c) containing substantially no phosphorous component, and a solid phosphorous component (y) are obtained by using a solid-liquid separation means 7. Because the solid phosphorous component (y) is separated from the sludge, the volume of the solid component (y) is greatly reduced with almost no other components derived from the raw waste water. Therefore, the solid phosphorous component (y) can be readily utilized as a raw material for the production of fertilizers or phosphorous chemicals. In addition, it is more preferred to convert the solid phosphorous component (y) into a substantially dried phosphorous component solid (p) which is more suitable for conveyance and transport through subjecting it to a phosphorous recovery means 8. This phosphorous recovery means 8 may include, for example, means for performing freeze drying, and/or dehydration/drying.

A portion of the primary sludge (x) which is obtained by the solid-liquid separation means 2 is returned to the anaerobic treatment tank 6 (not shown in the Figure).

In the above-illustrated invention, the structure of the aeration tank 1, solid-liquid separation means 2 and 7, and the anaerobic treatment tank 6, as well as routes for connecting such tanks are not particularly limited. Therefore, tanks, vessels and routes which have been employed conventionally can be utilized in the apparatus for carrying out the present invention. Particularly, in the apparatus, the aeration tank 1 preferably can be equipped with an aeration device 11 such as air pump or blower, while an anaerobic treatment tank 6 can be equipped with a stirring device. Furthermore, the respective conditions in these steps can be set according to the conventional means of the aerobic process, and solid-liquid separation process (see, Japanese Patent Provisional Publication No. Hei 9-10791).

Briefly, the treatment in an aeration tank 1 is carried out at room temperature. As the solid-liquid separation means 2 and 7, for example, a device for precipitation, centrifugation and filtration (including membrane separation) can be utilized. Among these, precipitation or centrifugation is preferred because expensive devices and/or special care is not required. If separation in a precipitation tank can be easily performed due to suitable properties of the liquid to be treated, the most preferred separation means can be precipitation. In an anaerobic treatment tank 6, the temperature of the treatment is not particularly limited, and can be set at an ambient temperature. The anaerobic treatment tank 6 preferably is equipped with a stirring device so that the release of phosphorous components is not inhibited by the released phosphorous components surrounding the microorganisms.

The phosphorous components finally recovered as a phosphorous component solid (p) is highly concentrated and considerably purified. Therefore, it can be readily utilized as a raw material for the production of fertilizers or phosphorous chemicals as discussed above.

### Examples

While examples of the present invention are described below, the scope of the present invention should not be limited thereto.

### Example 1

According to a laboratory batch anaerobic-aerobic activated sludge treatment process, a 1 L Erlenmeyer flask was charged with 500 ml of an activated sludge derived from a sewerage treatment plant, and 500 ml of organic waste water comprising phosphorous components of which constituents are listed in Table 1 below.

**Table 1**

| constituent | content (g/L) |
|---|---|
| CH₃COONa^{.}3H₂O | 0.68 |
| polypeptone | 0.1 |
| | 0.01 |
| yeast extract | 0.05 |
| NaCI | 0.0225 |
| | 0.075 |
| KH₂PO₄ | 0.075 |
| NaHCO₃ | 0.025 |
| MgSO₄·7H₂O | |
| CaCl₂ | |

One liter of the raw waste water was first subjected to an anaerobic treatment performed at 20°C, pH 7 for two hours of residence time, followed by an aerobic treatment at 20°C, pH 7 at an aeration rate of 20 volume of air/volume of vessel/minute using an aeration pump for five hours of residence time. During these processes, the waste water was continuously stirred using a stirrer at a constant volume of 1 L.

After the aerobic treatment was completed, the resulting sludge was dispensed into 25 tubes (Eppendorf), 1 ml for each tube. The tubes were divided into five groups, and respective five tubes were incubated at 50°C, 60°C, 70°C, 80°C or 90°C in constant temperature baths. From each of the groups, one tube was withdrawn at every 20 minutes, then each sample was centrifuged for 5 minutes at 8,000 x g. Thereafter, total phosphorous content, polyphosphoric acid content, and phosphoric acid content of each supernatant were determined according to the following method.

[Total phosphorous content] Hydrothermal degradation was performed in the presence of ammonium persulfate at 121°C for 30 minutes, then phosphoric acid content was determined using the method described below.

[Polyphosphoric acid content] Thermolysis was performed in the presence of 1 N HCl at 100°C for 7 minutes, then phosphoric acid content was determined using the method below.

[Phosphoric acid content] Phosphate anion content was determined according to the method of JISK0102, molybdenum blue (ascorbic acid reduction) absorption photometry.

Next, in order to examine if the phosphorous components contained in the supernatant could be separated by flocculation precipitation, CaCl2 (calcium chloride) was added at a final concentration of 50 mM, then centrifuged at 8,000 x g for 5 min. Total phosphorous content of the thus obtained precipitates was determined using the above described method.

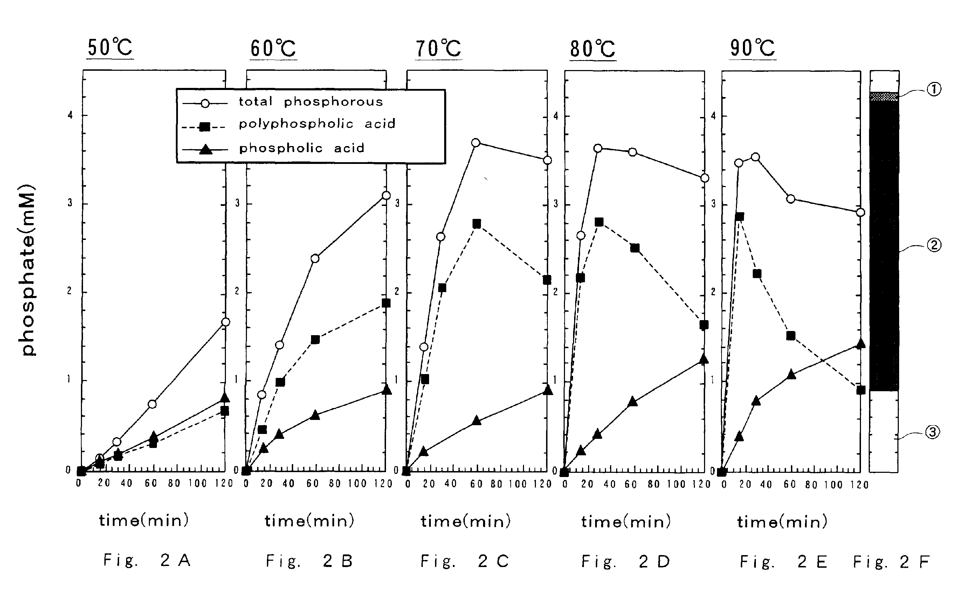

The results are shown in Figure 2. In Figure 2, time dependent alterations of each of the determined values from the samples heated at A, 50°C; B, 60°C; C, 70°C; D, 80°C; and E, 90°C are illustrated, while respective contents of phosphorous components ((1), phosphoric acid; (2), polyphosphoric acid; and (3), other phosphate compounds) contained in the activated sludge before the heat treatment are shown in Fig. 2F.

It is proved from Fig. 2 that when the activated sludge was heated at 50°C, total phosphorous components were released at a lower amount from the sludge; furthermore, they are released predominantly as phosphoric acids, rather than polyphosphoric acids. At this temperature, polyphosphoric acid granules seemed to be hardly released from the sludge. Meanwhile, when the sludge was treated at 70°C, as shown in Fig. 2C, about 90% of the polyphosphoric acids contained in the activated sludge were released within an hour from the beginning of the heat treatment. About 20% of polyphosphoric acids were degraded into phosphoric acids at this time. Almost all of the released phosphorous components could be recovered as precipitates when the heat treatment was conducted for 2 hours, by an addition of calcium chloride followed by centrifugation. When the heat treatment was performed at 90°C, as shown in Figure 2E, polyphosphoric acids were released rapidly, terminating at about 10 min. At this time point, about 10% of polyphosphoric acids were degraded into phosphoric acids. The released polyphosphoric acids were soon degraded into phosphoric acids, in particular, about 60% of the released polyphosphoric acids were converted into phosphoric acids within two hours from the beginning of the heat treatment. An amount of phosphorous which could be recovered from the thus obtained sample accounted to no more than about 20% of the released phosphorous. Therefore, it was suggested that when the phosphorous releasing step in the method of present invention is performed at 90°C, prompt flocculation of the released polyphosphoric acids is preferred.

### Example 2

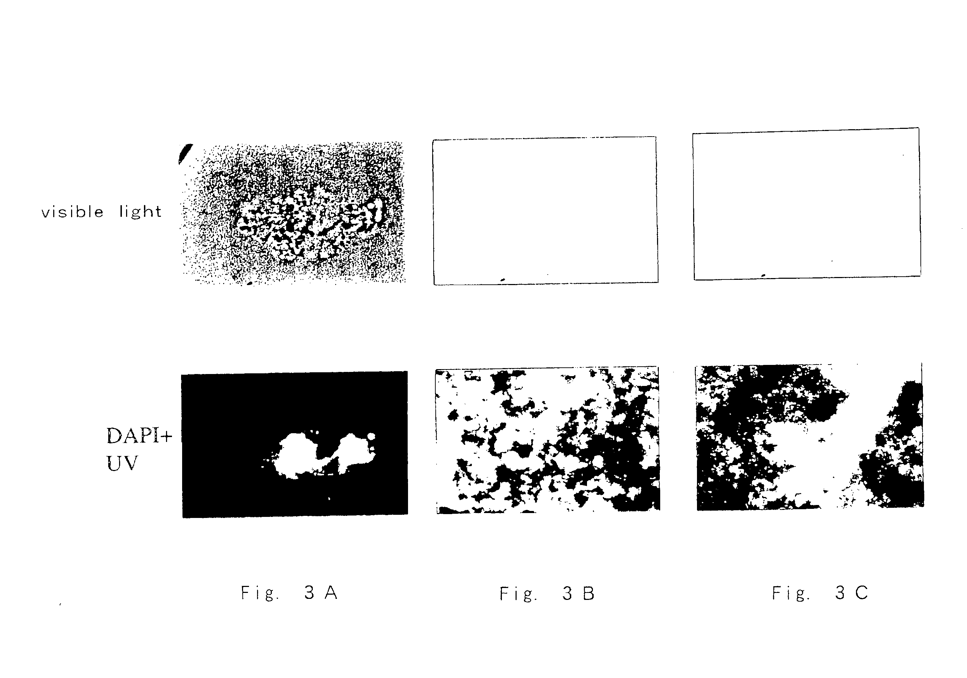

The presence of granules of polyphosphoric acids were observed with microscopy using the samples obtained in Example 1 under visible light, and under ultraviolet irradiation after DAPI (4', 6-diamidino-2-phenylindole) fluorescent staining. The selected samples were: A, an activated sludge before heat treatment; B, supernatant from the treated sludge heated at 70°C for 60 min.; and C, precipitates with CaCl2. Granules of polyphosphoric acids can emit a specific yellow light by ultraviolet (UV) irradiation after DAPI fluorescent staining, therefore, identification thereof can be easily carried out. The results of these experiments are shown in Figure 3. DAPI fluorescent staining of the activated sludge before the heat treatment followed by UV irradiation showed the presence of polyphosphoric acid yellow granules (see, Fig. 3A). On the other hand, polyphosphoric acid could not be found when similar observation was conducted with respect to a supernatant sample before heating. Polyphosphoric acid yellow granules were likewise observed with a supernatant sample after heating at 70°C for 60 min. (see, Fig. 3B) and a precipitation sample from the supernatant using calcium chloride (see, Fig. 3C). Therefore, the polyphosphoric acids which were determined in the above Example 1 could be confirmed as existing polyphosphoric acid granules.

Consequently, according to the present invention, there can be exerted such an effect that phosphorous components contained in an organic waste water are separated and recovered in a small volume of liquid or solid form in a short period of time. Therefore, reuse of the phosphorous components in an organic waste water can be facilitated.

In addition, because the thus recovered phosphorous components are concentrated as polyphosphoric acids, the amount of flocculant required for precipitation can be remarkably reduced.

Because particular reagents or equipment are not involved specifically in the method of the present invention, the method is advantageous in terms of enabling treatments at a significantly low cost.

## Claims

1. A method of treating sludge comprising the step of heating the sludge at 60°C to 90°C for 10 min. to 120 min. to release the phosphorous components from the sludge to a liquid phase.

2. The method according to claim 1, further comprising a step of solid-liquid separation of the heated mixture after releasing the phosphorous components, and precipitation of the phosphorous components by adding a flocculant to the liquid phase containing the released phosphorous components.

3. A method of treating organic waste water comprising the steps of:
(1) aerobically treating waste water in an aeration step;
(2) solid-liquid separating the treated waste water after the aeration step into a primary treated liquid and a primary sludge in a solid-liquid separation step;
(3) releasing phosphorous components from the primary sludge to a liquid phase by heating the primary sludge at 60°C to 90°C for 10 min. to 120 min. in a phosphorous component release step; and
(4) performing a second solid-liquid separation step to separate the heated primary sludge into a secondary treated liquid containing the released phosphorous components and a secondary sludge that released phosphorous components.

4. The method according to claim 3, further comprising a phosphorous flocculation step (5), wherein the released phosphorous components are precipitated from the secondary treated liquid by adding a flocculant to the secondary treated liquid.

5. The method according to claim 3 or 4, further comprising anaerobically treating the waste water in an anaerobic treatment step (6) prior to aeration step (1).

6. A method as claimed in any one of the previous claims wherein the phosphorous components are released from the sludge by heating the sludge at 70°C to 80°C.

7. A method as claimed in any one of the previous claims wherein the phosphorous components are released from the sludge by heating the sludge for 20 to 60 minutes.

8. A method for producing a fertiliser or phosphorous-based product which comprises the use of a method as claimed in any one of the previous claims.
